(19) Europäisches Patentamt

European Patent Office

Office européen des brevets

(11) EP 0 889 488 A1

## (12) DEMANDE DE BREVET EUROPEEN

(43) Date de publication:
07.01.1999 Bulletin 1999/01

(51) Int Cl.$^6$: **H01F 1/147**, H01H 50/16, H02K 1/02

(21) Numéro de dépôt: 98401488.6

(22) Date de dépôt: 18.06.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 04.07.1997 FR 9708448

(71) Demandeur: IMPHY S.A.
F-92800 Puteaux (FR)

(72) Inventeurs:
• Coutu, Lucien
58160 Sauvigny-les-Bois (FR)

• Chaput, Laurent
58160 Sauvigny-les-Bois (FR)
• Waeckerle, Thierry
58100 Nevers (FR)

(74) Mandataire: Ventavoli, Roger
USINOR,
Direction Propriété Industrielle,
Immeuble "La Pacific",
La Défense,
11/13 Cours Valmy,
TSA 10001
92070 La Défense (FR)

(54) **Alliage magnétique doux du type FE-NI-CR-TI pour circuit magnétique d'un relais à haute sensibilité**

(57) Alliage magnétique doux du type fer-nickel dont la composition chimique comprend, en poids : 40 % ≤ Ni + Co ≤ 65 % ; 0 % ≤ Co ≤ 7 % ; 2 % ≤ Cr ≤ 5 % ; 1 % ≤ Ti ≤ 3 % ; 0 % ≤ Al ≤ 0,5 % ; 0 % ≤ Mn + Si ≤ 2 % ; éventuellement jusqu'à 3 % de Mo, 2 % de W, 2 % de V, 1,5 % de Nb, 1 % de Ta et 3 % de Cu ; la somme des teneurs en Cr, Mo, W, V, Nb, Ta et Cu étant inférieure à 7 %, et la somme des teneurs en Mo, W, V, Nb, Ta et Cu étant inférieure à 4 %; le reste étant du fer et des impuretés, telles que le carbone, le soufre et le phosphore, résultant de l'élaboration, la composition chimique satisfaisant en outre les relations : Cr < 5 - 0,015 x $(Ni + Co - 52,5)^2$ , si : Ni + Co ≤ 52,5 ; Cr < 5 - 0,040 x $(Ni + Co - 52,5)^2$ , si : Ni + Co ≥ 52,5 ; l'alliage ayant une induction à saturation Bs supérieure à 0,9 Tesla, un champ coercitif inférieur à 10 A/m, une résistivité électrique ρ supérieure à 60 μΩcm et une dureté supérieure à 200 HV. Procédé de fabrication de l'alliage et utilisations.

EP 0 889 488 A1

**Description**

L'invention est relative à un alliage magnétique doux présentant à la fois de bonnes propriétés magnétiques, une bonne dureté et une bonne résistance à la corrosion. Cet alliage est particulièrement adapté à la fabrication du circuit magnétique du relais d'un disjoncteur différentiel à propre courant.

Les disjoncteurs différentiels sont destinés à assurer la sécurité des personnes en coupant brutalement un circuit électrique principal lorsqu'apparaît un défaut sur ce circuit. Il existe plusieurs types de disjoncteurs différentiels, et notamment des disjoncteurs différentiels du type dit « à propre courant ». Les disjoncteurs différentiels à propre courant sont constitués d'un détecteur de défaut de courant, d'un relais à haute sensibilité, d'une gâchette et d'un mécanisme d'ouverture du circuit électrique principal. Lorsqu'un défaut apparaît sur le circuit électrique principal, le détecteur de défaut envoie une impulsion électrique au relais à haute sensibilité, lequel s'ouvre et déclenche la gâchette, ce qui provoque la mise en mouvement du mécanisme d'ouverture du circuit électrique principal.

Le relais à haute sensibilité est constitué d'un circuit magnétique comportant une palette mobile et une armature fixe en forme de U, d'un ressort de rappel, d'un aimant permanent et d'une bobine. L'aimant permanent est disposé sous la barre inférieure de l'armature fixe en forme de U, et la bobine entoure une branche du U. La palette mobile est posée sur les deux extrémités des branches du U, et l'une de ses extrémités est fixée au ressort de rappel. Lorsque le relais est au repos, c'est à dire prêt à être déclenché, aucun courant ne parcourt la bobine, l'aimant permanent fait circuler un flux magnétique continu dans le circuit magnétique créant une force d'attraction qui maintient la palette mobile sur l'armature fixe, et le ressort de rappel est sous tension. Lorsqu'un défaut alternatif apparaît dans le circuit électrique principal, le détecteur de défaut envoie un courant électrique dans la bobine du relais. Ce courant engendre un champ magnétique qui vient désaimanter l'armature fixe, ce qui diminue la force magnétique d'attraction de la palette mobile contre l'armature fixe et provoque le basculement de la palette mobile sous l'effet de la tension du ressort de rappel. En basculant, la palette mobile déclenche la gâchette.

Pour qu'un tel relais fonctionne bien, le circuit magnétique doit être constitué d'un alliage magnétique doux caractérisé par une induction à saturation la plus élevée possible, un champ coercitif le plus faible possible et une résistivité électrique relativement élevée. Mais, pour que le relais fonctionne de façon fiable pendant longtemps, il est, de plus, souhaitable d'une part que l'alliage magnétique doux résiste bien à la corrosion atmosphérique humide pour éviter la formation d'oxydes dans la zone de contact de la palette mobile est de l'armature fixe, et d'autre part qu'il soit de dureté suffisante pour éviter l'usure locale et la déformation des pièces que pourraient engendrer les fonctionnements successifs.

Afin de satisfaire aux conditions de caractéristiques magnétiques souhaitables, on fabrique le circuit magnétique en alliage magnétique doux du type fer-nickel contenant, en poids, 48 % de nickel, le reste étant du fer et des impuretés résultant de l'élaboration. Cet alliage a l'avantage d'avoir une induction à saturation Bs de 1,5 tesla et un champ coercitif Hc de 4 A/m, ce qui correspond aux meilleures caractéristiques qu'on sait obtenir. Mais, cet alliage présente l'inconvénient d'avoir une dureté assez faible (de l'ordre de 100 HV) et d'être trop peu résistant à la corrosion. Pour compenser ces insuffisances, le circuit magnétique, ou au moins la palette mobile, est protégé par un revêtement anticorrosion (par exemple, un dépôt d'or) ou par un revêtement durcissant et résistant à la corrosion, par exemple par un dépôt de chrome. Mais, cette technique présente l'inconvénient de coûter cher et de créer, dans la zone de contact de la palette mobile et de l'armature, une sur épaisseur qui détériore le comportement magnétique du circuit magnétique pris dans son ensemble du fait d'un effet d'entrefer et de contraintes résiduelles.

Afin de remédier au problème de dureté, il a été proposé, notamment dans la demande de brevet européen EP 0 740 313, d'utiliser, pour cet usage, un alliage magnétique doux du type fer-nickel-titane contenant, en poids, 46 % à 46,5 % de nickel, environ 1,8 % de titane, de 0 % à 1 % de niobium, de 0,45 % à 0,5 % de manganèse, de 0,25 % à 0,45 % de silicium, le reste étant du fer et des impuretés résultant de l'élaboration. Cet alliage a l'avantage d'avoir une induction à saturation de 1,35 tesla et une dureté supérieure à 220 HV. Mais il présente l'inconvénient d'avoir un champ coercitif Hc de 10 A/m, ce qui est relativement élevé, et, de plus, il a une résistance à la corrosion un peu insuffisante.

Aucun des alliages connus n'est donc pleinement satisfaisant, et le but de la présente invention est de remédier à cet inconvénient en proposant un alliage magnétique doux bien adapté à la fabrication du circuit magnétique d'un relais à haute sensibilité, ayant une induction à saturation Bs supérieure à 0,9 tesla, un champ coercitif Hc sensiblement inférieur à 10 A/m, une résistivité électrique p supérieure à 60 $\mu\Omega$cm, une dureté supérieure à 200 HV et une bonne résistance à la corrosion atmosphérique.

A cet effet, l'invention a pour objet un alliage magnétique doux du type fer-nickel dont la composition chimique comprend, en poids :

$$40 \% \leq Ni + Co \leq 65 \%$$

$$0 \% \leq Co \leq 7 \%$$

$$2 \% \leq Cr \leq 5 \%$$

$$1 \% \leq Ti \leq 3\%$$

$$0 \% \leq Al \leq 0{,}5 \%$$

$$0\% \leq Mn \leq 2\%$$

$$0\% \leq Si \leq 1\%$$

éventuellement jusqu'à 3 % de Mo, jusqu'à 2 % de W, jusqu'à 2 % de V, jusqu'à 1,5 % de Nb, jusqu'à 1 % de Ta et jusqu'à 3 % de Cu, la somme des teneurs en Cr, Mo, W, V, Nb, Ta et Cu étant inférieure à 7 %, et la somme des teneurs en Mo, W, V, Nb, Ta et Cu étant inférieure à 4 %, le reste étant du fer et des impuretés, telles que le carbone, le soufre et le phosphore, résultant de l'élaboration; la composition chimique satisfaisant en outre les relations :

$$Cr < 5 - 0{,}015 \times (Ni + Co - 52{,}5)^2 \qquad si : Ni + Co \leq 52{,}5$$

$$Cr < 5 - 0{,}040 \times (Ni + Co - 52{,}5)^2 \qquad si : Ni + Co \geq 52{,}5$$

l'alliage ayant une induction à saturation Bs supérieure à 0,9 Tesla, un champ coercitif inférieur à 10 A/m, une résistivité électrique p supérieure à 60 $\mu\Omega$cm et une dureté supérieure à 200 HV.

De préférence la composition chimique de l'alliage est telle que :

$$48 \% \leq Ni + Co \leq 55 \%$$

$$0 \% \leq Co \leq 3 \%$$

$$2\% \leq Cr \leq 4\%$$

$$0\% \leq Mo + W + V + Nb + Ta + Cu \leq 1 \%$$

$$1{,}3 \% \leq Ti \leq 1{,}7 \%$$

$$0{,}05 \% \leq Al \leq 0{,}25 \%$$

$$0{,}1\% \leq Mn \leq 0{,}3\%$$

$$0 \% \leq Si \leq 0{,}1 \%$$

Et il est préférable que les impuretés résultant de l'élaboration soient telles que:

EP 0 889 488 A1

C < 0,01 %

S < 0,001 %

P < 0,01 %

Mieux encore, la composition chimique de l'alliage doit être telle que :

$$50 \% \leq Ni + Co \leq 52 \%$$

$$0\% \leq Co \leq 3\%$$

$$3 \% \leq Cr \leq 4 \%$$

$$0\% \leq Mo + W +V + Nb + Ta + Cu \leq 0,5 \%$$

$$1,3 \% \leq Ti \leq 1,7\%$$

$$0,05 \% \leq Al \leq 0,25 \%$$

$$0,1\% \leq Mn \leq 0,3\%$$

$$0\% \leq Si \leq 0,1\%$$

Pour fabriquer une bande ou une pièce en alliage magnétique doux selon l'invention, il est préférable d'effectuer sur la bande, ou sur la pièce, un recuit à haute température, à une température comprise entre 1000 °C et 1175 °C pendant 2 à 6 heures, et un revenu à une température comprise entre 650 °C et 750 °C pendant 1 à 5 heures.

L'invention concerne également un relais à haute sensibilité, et notamment un relais pour disjoncteur différentiel à propre courant, du type comprenant un circuit magnétique constitué d'une palette mobile et d'une armature fixe, dans lequel la palette mobile ou l'armature fixe, ou les deux, sont en alliage magnétique doux selon l'invention.

L'alliage magnétique doux peut, également, être utilisé de façon avantageuse pour la fabrication de certains types de moteurs ou de générateurs électriques de petites dimensions, tels qu'un moteur pour montre électrique à aiguilles. Dans cette application, en effet, les propriétés magnétiques souhaitées sont très comparables, et le problème de la résistance à la corrosion se pose de façon semblable.

D'une façon plus générale, l'alliage magnétique doux peut être utilisé avantageusement pour toutes les applications dans lesquelles l'alliage magnétique doux est soumis à des sollicitations mécaniques ou chimiques sévères, soit pendant la fabrication et l'assemblage des pièces, soit pendant l'utilisation. Il s'agit, par exemple, d'électroaimants, de blindages magnétiques spéciaux, de moteurs pas à pas, de synchro-résolveurs, de membranes et de lames vibrantes mues par des électroaimants, d'actionneurs ou d'activateurs divers.

L'invention va maintenant être décrite de façon plus précise, mais non limitative, et illustrée par un exemple.

L'alliage selon l'invention est un alliage du type fer-nickel contenant, en poids : - de 40 % à 65 % de nickel dont une partie peut être substituée, jusqu'à hauteur de 7 % par du cobalt; de préférence, la teneur en nickel (ou la somme Ni + Co) doit être comprise entre 48 % et 55 %, et mieux encore entre 50 % et 52 %, pour obtenir une induction à saturation Bs élevée; le cobalt étant un élément coûteux, sa teneur doit, de préférence, rester inférieure à 3 %, voire, être nulle, bien qu'il puisse, dans certains cas, améliorer certaines caractéristiques magnétiques ;

- de 2 % à 5 % de chrome pour améliorer la résistance à la corrosion atmosphérique; mais, de préférence, la teneur en chrome doit être comprise entre 3 % et 4 % afin, d'une part, d'obtenir une résistance à la corrosion suffisante, et, d'autre part, de ne pas trop diminuer l'induction à saturation Bs qu'on préfère, généralement, supérieure à 0,9 tesla ;

- de 1 % à 3 %, et de préférence de 1,3 % à 1,6 % ou même 1,7 % de titane, accompagné de 0 % à 0,5 %, et, de préférence, de 0,05 % à 0,25 % d'aluminium, pour permettre d'obtenir, par un durcissement par précipitation, une dureté supérieure à 200 HV ; cependant, une teneur trop élevée en titane, ou une dureté trop élevée (HV > 300), aurait un effet néfaste sur l'induction à saturation et sur le champ coercitif;
- le reste étant du fer, éventuellement des éléments d'alliage présents en petite quantité, un peu de manganèse et de silicium, et des impuretés résultant de l'élaboration.

Les éléments d'alliage complémentaires sont, notamment, le molybdène, le tungstène, le vanadium, le niobium, le tantale et le cuivre. Ces éléments peuvent être ajoutés pour améliorer, par exemple, la résistance à l'oxydation ou à l'usure. Les teneurs en ces éléments doivent rester dans les limites suivantes : Mo ≤ 3 %, W ≤ 2 %, V ≤ 2 %, Nb ≤ 1,5 %, Ta ≤ 1 %, et Cu ≤ 3 %. Mais la somme totale des teneurs en chacun de ces éléments doit rester inférieure à 4 %, de préférence, inférieure à 1%, et mieux encore inférieure à 0,5 %, pour ne pas trop diminuer l'induction à saturation. De plus, la somme Cr + Mo + W + V + Nb + Ta + Cu doit rester inférieure à 7 %, pour les mêmes raisons.

De préférence, la somme des teneurs en manganèse et en silicium doit être inférieure à 2 %.

Le manganèse contribue à améliorer la ductilité à chaud, notamment en fixant le soufre. Sa teneur doit être comprise entre 0 % et 2 %, et, de préférence, entre 0,1 % et 0,3 %, pour éviter de trop détériorer l'induction à saturation.

Le silicium sert à élaborer le métal, mais on préférera limiter sa teneur à 1 %, de préférence à 0,15 %, et mieux encore à 0,1 %, également pour éviter de trop détériorer l'induction à saturation.

Les impuretés sont notamment, le carbone, le soufre et le phosphore. leurs teneurs doivent rester très faibles, et , notamment, il est préférable que :

- la teneur en carbone reste inférieure à 0,01 % pour ne pas détériorer les propriétés magnétiques,
- la teneur en soufre reste inférieure à 0,001 % pour améliorer la résistance à la corrosion par piqûres,
- la teneur en phosphore reste inférieure à 0,01 % pour ne pas détériorer les propriétés magnétiques.

De plus, pour garantir que l'induction à saturation Bs reste supérieure à 0,9 T, il est souhaitable que les teneurs en Cr et Ni (ou Ni + Co), soient telles que :

$$Cr < 5 - 0,015 \times (Ni + Co - 52,5)^2 \qquad si : Ni + Co \leq 52,5$$

$$Cr < 5 - 0,040 \times (Ni + Co - 52,5)^2 \qquad si : Ni + Co \geq 52,5$$

Par ailleurs, la teneur en titane minimale pour obtenir la dureté souhaitée dépend légèrement de la teneur en chrome, et les teneurs en titane et chrome doivent, de préférence, satisfaire la relation :

$$Ti \geq 1,8 - 0,1 \times Cr$$

A propos de la teneur en chrome, on a constaté que 2 % à 3 % de cet élément multipliait par 2 la résistance à la corrosion de l'alliage (par rapport à un alliage identique par ailleurs, mais ne contenant pas de chrome), et que 5 % multipliait la résistance à la corrosion par 4. On a également constaté que le chrome avait une forte incidence sur la résistivité électrique qui est d'environ un accroissement de 5 à 10 $\mu\Omega$cm pour une augmentation de 1% de la teneur en Chrome, pour une teneur en chrome inférieure à 5 %.

L'alliage qui a cette composition est élaboré, par exemple, par fusion sous vide, puis il est coulé sous forme de lingot et laminé à chaud et à froid pour obtenir un produit, par exemple, une bande mince dans laquelle on peut découper des pièces. Pour conférer au produit, ou aux pièces, les caractéristiques d'emploi souhaitées, on effectue un double traitement thermique : tout d'abord un recuit à haute température, entre 1000 °C et 1175 °C, de préférence au-dessus de 1050 °C et mieux encore au-dessus de 1100 °C, pendant de 2 à 6 heures sous atmosphère d'hydrogène pur et sec, pour obtenir une bonne recristallisation, suivi d'un revenu à basse température, de préférence entre 650 °C et 750 °C pendant 1 à 5 heures, pour durcir le métal par précipitation de phase $\gamma'$ ($Ni_3Ti$, ou $Ni_3TiAl$).

A titre d'exemple, on a réalisé un alliage dont la composition était, en % en poids :

| Ni | Cr | Mo | Ti | Al | Mn | Si | C | S | P | Fe |
|---|---|---|---|---|---|---|---|---|---|---|
| 50,10 | 3,30 | 0,5 | 1,45 | 0,24 | 0,21 | 0,02 | 0,008 | 0,0009 | 0,006 | bal |

Avec cet alliage, on a fabriqué par laminage à chaud, puis à froid, une bande de 1 mm d'épaisseur qu'on a traité à 1150 °C pendant 4 heures sous atmosphère d'hydrogène pur et sec, et qu'on a, ensuite, soumise à un revenu à 725 °C pendant trois heures, également sous hydrogène. Les caractéristiques obtenues ont été :

- induction à saturation      Bs = 1,03 tesla (mesurée avec H =1000 A/m)
- champ coercitif      Hc = 4,8 A/m
- résistivité électrique      $\rho$ = 90 $\mu\Omega$cm
- dureté vickers      HV = 250

De plus, on a effectué un test de résistance à la corrosion atmosphérique qui consiste à immerger des échantillons de métal dans une solution d'acide acétique dilué à 30 % dans l'eau, et à mesurer la perte de poids des échantillons au bout de plusieurs centaines d'heures. Ce test a été effectué sur l'alliage FeNiCrTi donné en exemple et conforme à l'invention, et, à titre de comparaison, sur un alliage Ni48Fe selon l'art antérieur et dont la résistance à la corrosion est jugée un peu insuffisante. Le test à montré que la vitesse d'attaque chimique de l'alliage selon l'invention est environ trois fois plus faible que celle de l'alliage selon l'art antérieur.

Ces propriétés rendent l'alliage particulièrement adapté à la fabrication de l'armature fixe en forme de U et de la palette mobile du circuit magnétique d'un relais à haute sensibilité pour disjoncteur différentiel. Ces deux pièces sont obtenues par découpe dans une bande adoucie de 1,5 mm d'épaisseur, puis mise en forme par pliage. Puis, les pièces sont rectifiées de façon à obtenir une géométrie parfaite de zones de contact de la palette et de l'armature. On effectue, alors, le double traitement thermique consistant en un recuit vers 1150 °C suivi d'un revenu vers 725 °C, sous atmosphère protectrice pour ne pas oxyder le métal. Pour corriger la petite déformation des pièces associée au durcissement (contraction de l'ordre de 0,1 %), on peut, si nécessaire, faire une nouvelle rectification légère des pièces, suivie d'un nouveau revenu vers 725 °C pour restaurer les propriétés magnétiques des zones rectifiées. On réalise enfin un rodage léger des pièces pour normaliser les surfaces de contact de l'armature et de la palette. Les pièces ainsi obtenues, ayant une bonne dureté et une bonne résistance à la corrosion atmosphérique, peuvent être utilisées en l'état, sans traitement de surface complémentaire. Dans un tel relais, seule la palette ou seule l'armature ou les deux pièces peuvent être en alliage conforme à l'invention.

L'alliage selon l'invention possède, à la fois, des propriétés magnétiques, une dureté, et une résistance à la corrosion qui rendent son utilisation avantageuse pour de nombreuses applications telles que les pièces magnétiques de moteurs ou de générateurs électriques de petite dimension. Un tel moteur est, par exemple, un moteur pour montre électrique à aiguilles du type comprenant un circuit magnétique constitué d'un stator et d'un noyau de bobine. Le stator ou le noyau de bobine, ou les deux, peuvent, avantageusement, être constitués d'un alliage magnétique doux selon l'invention.

**Revendications**

1. Alliage magnétique doux du type fer-nickel caractérisé en ce que sa composition chimique comprend, en poids :

$$40 \% \leq Ni + Co \leq 65 \%$$

$$0\% \leq Co \leq 7\%$$

$$2 \% \leq Cr \leq 5 \%$$

$$1 \% \leq Ti \leq 3 \%$$

$$0 \% \leq Al \leq 0,5 \%$$

$$0\% \leq Mn \leq 2\%$$

$$0\% \leq Si \leq 1\%$$

éventuellement jusqu'à 3 % de Mo, jusqu'à 2 % de W, jusqu'à 2 % de V, jusqu'à 1,5 % de Nb, jusqu'à 1 % de Ta et jusqu'à 3 % de Cu, la somme des teneurs en Cr, Mo, W, V, Nb, Ta et Cu étant inférieure à 7 %, et la somme des teneurs en Mo, W, V, Nb, Ta et Cu étant inférieure à 4 %, le reste étant du fer et des impuretés, telles que le carbone, le soufre et le phosphore, résultant de l'élaboration, la composition chimique satisfaisant en outre les relations :

$$Cr < 5 - 0,015 \times (Ni + Co - 52,5)^2 \qquad si : Ni + Co \leq 52,5$$

$$Cr < 5 - 0,040 \times (Ni + Co - 52,5)^2 \qquad si : Ni + Co \geq 52,5$$

l'alliage ayant une induction à saturation Bs supérieure à 0,9 Tesla, un champ coercitif inférieur à 10 A/m, une résistivité électrique p supérieure à 60 $\mu\Omega$cm et une dureté supérieure à 200 HV.

**2.** Alliage magnétique doux selon la revendication 1 caractérisé en ce que sa composition chimique est telle que :

$$48\% \leq Ni + Co \leq 55\%$$

$$0\% < Co < 3\%$$

$$3\% \leq Cr \leq 4\%$$

$$0\% \leq Mo + W + V + Nb + Ta + Cu \leq 1\%$$

$$1,3\% \leq Ti \leq 1,7\%$$

$$0,05\% \leq Al \leq 0,25\%$$

$$0,1\% \leq Mn \leq 0,3\%$$

$$0\% \leq Si \leq 0,1\%$$

le reste étant du fer et des impuretés, telles que le carbone, le soufre et le phosphore, résultant de l'élaboration.

**3.** Alliage magnétique doux selon la revendication 1 ou la revendication 2 caractérisé en ce que les teneurs en impuretés résultant de l'élaboration sont telles que :

$$C < 0,01\%$$

$$S < 0,001\%$$

$$P < 0{,}01\ \%$$

4. Alliage magnétique doux selon l'une quelconque des revendications 1 à 3 caractérisé en ce que sa composition est telle que :

$$50\ \% \leq Ni + Co \leq 52\ \%$$

$$0\% \leq Co \leq 3\%$$

$$3\% \leq Cr \leq 4\%$$

$$0\% \leq Mo + W + V + Nb + Ta + Cu \leq 0{,}5\ \%$$

$$1{,}3\ \% \leq Ti \leq 1{,}7\ \%$$

$$0{,}05\ \% \leq Al \leq 0{,}25\ \%$$

$$0{,}1\ \% \leq Mn \leq 0{,}3\ \%$$

$$0\% \leq Si \leq 0{,}1\%$$

5. Procédé pour la fabrication d'une bande, ou d'une pièce, en alliage magnétique doux selon l'une quelconque des revendications 1 à 4, caractérisé en ce que :

   - on fabrique, avec l'alliage, une bande ou une pièce,
   - et on effectue sur la bande, ou sur la pièce, un recuit à haute température, à une température comprise entre 1000 °C et 1175 °C pendant 2 à 6 heures, puis un revenu à une température comprise entre 650 °C et 750 °C pendant 1 à 5 heures.

6. Relais, et notamment relais pour disjoncteur différentiel à propre courant, du type comprenant un circuit magnétique constitué d'une palette mobile et d'une armature fixe, caractérisé en ce que l'une au moins des pièces que sont la palette mobile et l'armature fixe, sont en alliage magnétique doux selon l'une quelconque des revendications 1 à 4.

7. Moteur ou générateur électrique de petite dimension tel que, par exemple, un moteur pour montre électrique à aiguilles du type comprenant un circuit magnétique constitué d'un stator et d'un noyau de bobine, caractérisé en ce que au moins un composant pris parmi le stator et le noyau de bobine est constitué d'un alliage magnétique doux selon l'une quelconque des revendications 1 à 4.

8. Synchro-résolveur caractérisé en ce qu'il est constitué d'un alliage magnétique doux selon l'une quelconque des revendications 1 à 4.

9. Membrane ou lame vibrante mue par un électroaimant caractérisée en ce qu'elle est constituée d'un alliage magnétique doux selon l'une quelconque des revendications 1 à 4.

Office européen
des brevets

**RAPPORT DE RECHERCHE EUROPEENNE**

Numéro de la demande

EP 98 40 1488

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | CHEMICAL ABSTRACTS, vol. 90, no. 20, 14 mai 1979 Columbus, Ohio, US; abstract no. 161323f, MOMOSE ET AL: "soft magnetic materials" page 604; colonne 1; XP002053525 * abrégé * | 1-4 | H01F1/147 H01H50/16 H02K1/02 |
| A | & JP 54 003294 A (TOKYO SHIBAURA ELECTRIC CO) * abrégé * | 1-4 | |
| D,A | EP 0 740 313 A (VACUUMSCHMELZE GMBH) 30 octobre 1996 * revendications 1,3,8 * | 1,5,6 | |
| A | H.ERIKSSON ET AL: "50 Permalloy Alloyed with Cr for increased corrosion Resistance" IEEE TRANSACTIONS ON MAGNETICS., vol. 13, no. 5, septembre 1977, pages 1451-1452, XP002053524 NEW YORK US * le document en entier * | 1,6 | |
| A | EP 0 505 595 A (VACUUMSCHMELZE GMBH) 30 septembre 1992 * revendications 1,7,8 * | 1,7 | |
| A | EP 0 640 895 A (VACUUMSCHMELZE GMBH) 1 mars 1995 * revendications 1-3 * | 1,7 | |

**DOMAINES TECHNIQUES RECHERCHES (Int.Cl.6)**

H01F
H01H
H02K

Le présent rapport a été établi pour toutes les revendications

| Lieu de la recherche | Date d'achèvement de la recherche | Examinateur |
|---|---|---|
| LA HAYE | 22 octobre 1998 | Decanniere, L |